Europäisches Patentamt

European Patent Office

Office européen des brevets

(19)

(11) Numéro de publication: **0 488 856 B1**

(12)

# FASCICULE DE BREVET EUROPEEN

(45) Date de publication du fascicule du brevet: **27.09.95**  (51) Int. Cl.⁶: **C01F 5/30**, C08F 4/02, B01J 27/138

(21) Numéro de dépôt: **91403139.8**

(22) Date de dépôt: **20.11.91**

(54) **Particules de chlorure de magnésium à structure polyèdre, composante catalytique supportée sur ces particules, procédé de fabrication de ces produits et procédé d'obtention de polyoléfines à partir de cette composante catalytique.**

(30) Priorité: **29.11.90 FR 9014934**

(43) Date de publication de la demande:
**03.06.92 Bulletin  92/23**

(45) Mention de la délivrance du brevet:
**27.09.95 Bulletin  95/39**

(84) Etats contractants désignés:
**AT BE DE ES FR GB IT NL SE**

(56) Documents cités:
**FR-A- 2 266 706**
**FR-A- 2 339 574**
**FR-A- 2 378 046**

(73) Titulaire: **ELF ATOCHEM S.A.**
**4 & 8, Cours Michelet**
**La Défense 10**
**F-92800 Puteaux (FR)**

(72) Inventeur: **Spitz, Roger**
**44, Rue des Fleurs,**
**Serezin**
**F-69360 St-Symphorien d'Ozon (FR)**
Inventeur: **Soto, Thierry**
**22, Rue Lieutenant Colonel Girard**
**F-69007 Lyon (FR)**
Inventeur: **Brun, Claude**
**Clos St Pierre**
**F-64320 Idron (FR)**
Inventeur: **Duranel, Laurent**
**Ouartier Bergoué**
**F-64370 Orthez de Bearn (FR)**

(74) Mandataire: **Foiret, Claude et al**
**ELF ATOCHEM S.A.**
**Département Propriété Industrielle**
**La Défense 10 - Cedex 42**
**F-92091 Paris-La-Défense (FR)**

**Description**

La présente invention concerne des particules de chlorure de magnésium, de préférence anhydre, (MgCl$_2$) de forme nouvelle ainsi que leur procédé de fabrication. Ces particules de MgCl$_2$ peuvent être utilisées comme support catalytique, en particulier dans les composantes de catalyseur du type Ziegler Natta. Ces composantes catalytiques utilisées dans la polymérisation des oléfines conservent la morphologie du support. Elles font également partie de l'invention.

Le MgCl$_2$ selon l'invention est constitué de particules poreuses se présentant, au microscope, sous la forme de polyèdres sensiblement réguliers à six ou huit faces dont les faces deux à deux symétriquement opposées sont sensiblement parallèles et dont deux grandes faces allongées, formant la face du dessus et la face du dessous d'un polyèdre, telles que dans chacune la plus grande diagonale (D) soit supérieure à la plus petite distance (d) séparant deux cotés opposés, sont entourées sensiblement perpendiculairement par les autre faces sensiblement rectangulaires formant les cotés dudit polyèdre, la longueur du plus petit coté (e) de chacune desdites faces sensiblement rectangulaires étant inférieure à la plus petite distance (d) séparant les deux cotés opposés des grandes faces allongées.

Les faces deux à deux symétriquement opposées d'un polyèdre étant sensiblement parallèles, lesdites faces peuvent être considérées de fait comme géométriquement sensiblement identiques.

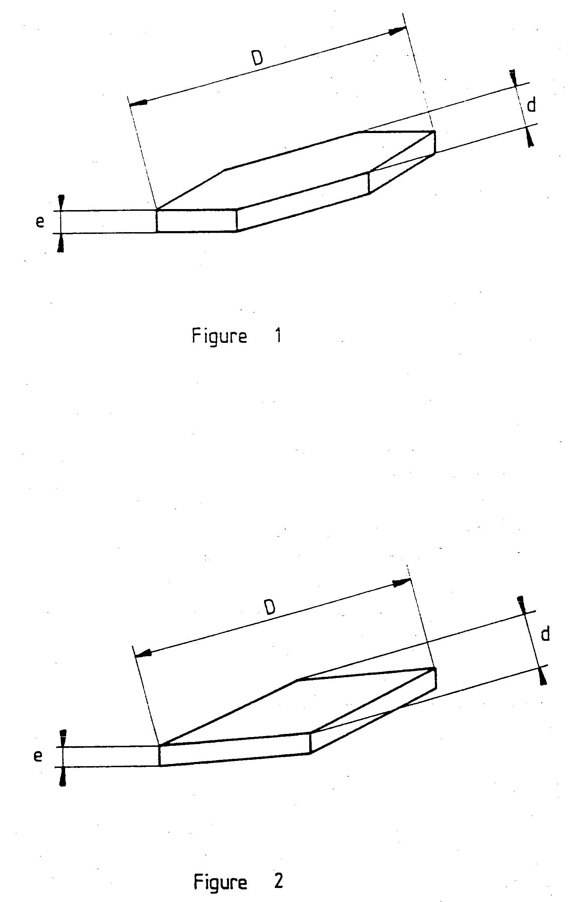

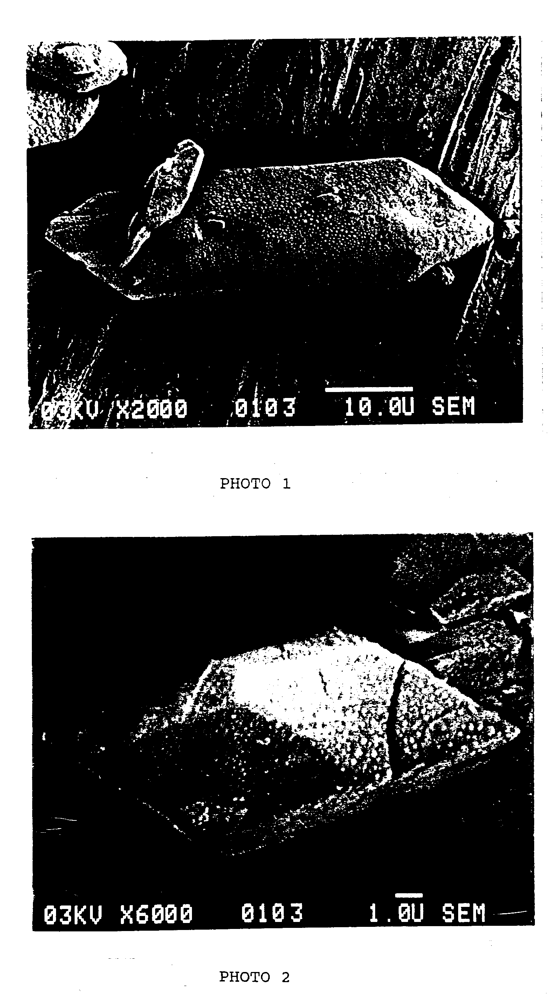

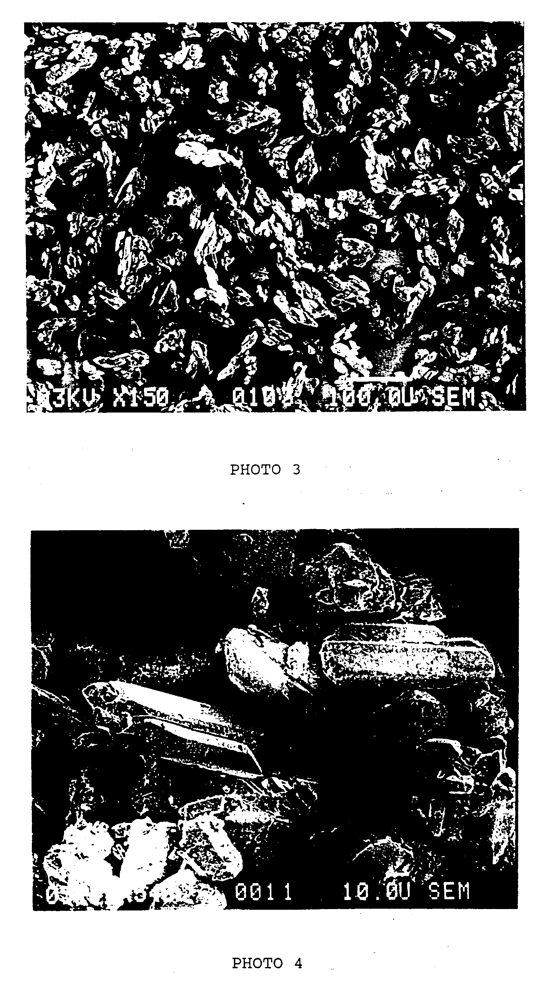

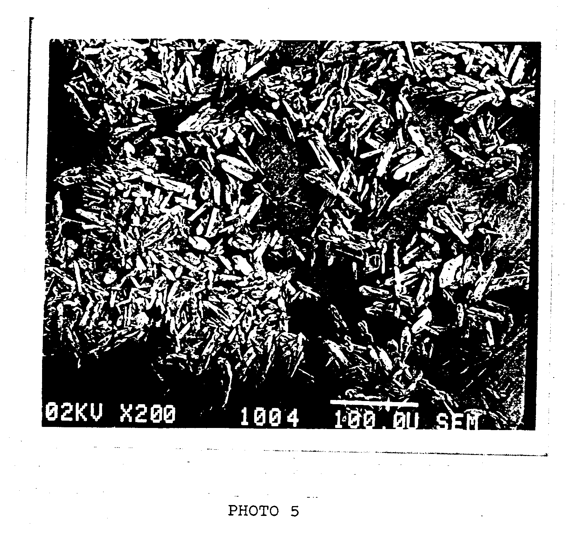

La plus grande diagonale (D) de chacune des deux grandes faces allongées d'un polyèdre est habituellement de 10 à 100μm. La plus petite distance (d) séparant deux côtés opposés de chacune de ces deux grandes faces est habituellement de 4 à 40 μm. La longueur du plus petit côté (e) de chacune des autres faces formant le polyèdre, longueur que l'on peut également considérer comme l'épaisseur des particules de MgCl$_2$, est habituellement de 2 à 20 μm. Ces dimensions des particules sont, bien entendu, associées de façon à respecter la définition du polyèdre et, en conséquence, telles que de préférence le rapport $\frac{D}{d}$ est de 2 à 7 et le rapport $\frac{d}{e}$ est de 1 à 3. Les Figures 1 et 2 en annexe schématisent ces particules de MgCl$_2$.

Le MgCl$_2$ est constitué généralement à plus de 90 % en nombre de particules formées d'un mélange de polyèdres à six et huit faces tels que définis. Il n'est d'ailleurs pas exclu que le pourcentage des particules ne répondant pas à la définition soit en fait des restes de strates provenant de polyèdres plus ou moins brisés en cours de manipulation ou d'agglomérats de particules conformes à l'invention.

Les particules de MgCl$_2$ possèdent une faible porosité. Elle peut être de 0,1 à 1 cm$^3$/g et mieux de 0,2 à 0,8 cm$^3$/g. Leur surface spécifique est habituellement de 0,5 à 10 m$^2$/g et mieux de 1 à 3 m$^2$/g.

La taille moyenne des particules de MgCl$_2$ mesuré par MALVERN est généralement de 10 à 100 μm pour une distribution granulométrique resserrée. Habituellement la largeur de distribution granulométrique exprimée en

$$\frac{\underline{D90}}{D10}$$

est inférieure à 15 et plus généralement inférieure à 10, D90 est le diamètre en-dessous duquel se trouvent 90 % en masse des particules et D10 est le diamètre en-dessous duquel se trouvent 10 % en masse de particules.

Il est connu d'utiliser des complexes de solvants d'halogénures metalliques comme catalyseur de polymérisation des oléfines. La demande de brevet FR-A-2266706 décrit un procédé de fabrication de tels catalyseurs par coprécipitation à partir de complexes d'éther de magnésium. Selon la présente invention, les particules de MgCl$_2$ sont obtenues par mise en suspension de MgCl$_2$, de préférence anhydre, dans un de ses solvants complexant, le rapport molaire solvant sur MgCl$_2$ étant inférieur au rapport de solubilité de ces deux corps à la température de la suspension, ladite suspension étant maintenue à une température appropiée, de préférence près de la température d'ébullition du solvant complexant sans descendre au dessous de 30°C de cette température d'ébullition pendant un temps suffisant pour permettre le gonflement à coeur des particules par le solvant complexant. Selon ce procédé, il est donc indispensable que du MgCl$_2$ reste en suspension dans le solvant complexant sursaturé en MgCl$_2$. Dans ces conditions il est recommandé que le milieu reste biphasique et tel qu'il contienne suffisamment de solvant complexant pour maintenir du MgCl$_2$ en suspension.

Par solvant complexant on entend: tout composé chimique, basique au sens de Lewis, pouvant former avec le MgCl$_2$ un complexe de stoechiométrie définie et stable même en présence d'un excès de ce dit solvant, voire même dans le solvant pur.

Parmi les solvants particulièrement adaptés à la fabrication des particules de MgCl$_2$ tels que précédemment définies on choisit de préférence le tétrahydrofurane.

Dans les conditions opératoires recommandées la mise en suspension s'effectue de façon classique en mettant en contact avec le solvant complexant, de préférence sous agitation, un MgCl$_2$, de préférence anhydre ou de qualité commerciale de préférence à moins de 3 % d'eau, de structure quelconque. Le MgCl$_2$ est maintenu en suspension pendant un temps suffisant, de l'ordre de quelques heures, pour permettre le gonflement à coeur des particules par le solvant complexant. Afin d'obtenir les meilleurs résultats il est recommandé d'opérer pendant la durée de la mise en oeuvre du procédé sensiblement à une température de (Teb -30°C) à (Teb + 40°C), Teb étant la température d'ébullition du solvant complexant à la pression atmosphérique. Ce traitement permet le réarrangement des particules du MgCl$_2$ initial.

Les phénomènes les plus apparents qui se produisent au cours du réarrangement granulométrique sont la disparition des particules fines et la disparition des grosses particules de MgCl$_2$ initial avec l'apparition d'une forme particulière de particules tels que précédemment définies dont le distribution granulométrique est resserrée.

Une fois cette opération de réarrangement des particules terminée, les particules de MgCl$_2$ en suspension sont séparées du solvant saturé de MgCl$_2$, éventuellement lavées, par exemple par un hydrocarbure, et éventuellement séchées thermiquement et/ou traitées sous vide ou par voie chimique pour éliminer en tout ou partie le solvant complexant.

Pour obtenir des particules de grandes dimensions il est recommandé, après le traitement de réarrangement des particules de leur faire subir un traitement de croissance. Ce traitement de croissance peut consister à ajouter, dans le milieu de particules en suspension dans le solvant saturé de MgCl$_2$, sensiblement simultanément d'une part une solution de MgCl$_2$ dans un solvant complexant, identique ou différent de celui du milieu initial, et, d'autre part un liquide inerte non solvant du MgCl$_2$ et miscible au solvant, tel un hydrocarbure saturé. Les meilleurs résultats sont obtenus lorsque cet ajout est effectué de telle façon que le rapport du débit de la solution de MgCl$_2$ dans le solvant complexant sur le débit de liquide inerte est constant. Ce rapport est habituellement compris entre 20 et 0,2 et mieux entre 10 et 0,5.

Si nécessaire, afin de réduire la solubilité du MgCl$_2$ dans le milieu initial, il est possible d'ajouter dans le milieu de particules de MgCl$_2$ en suspension dans le solvant saturé de MgCl$_2$, préalablement à l'ajout sensiblement simultané de solution saturée de MgCl$_2$ et de liquide inerte, un liquide inerte et non solvant du MgCl$_2$ et miscible au solvant complexant du MgCl$_2$.

L'opération se fait habituellement de la température ambiante à 80°C. Le volume de solution de MgCl$_2$ ajouté au milieu conditionne la taille finale des particules, le MgCl$_2$ de la solution ajoutée cristallisant sur les particules initiales du milieu en augmentant leur taille sans en changer leur morphologie.

Le MgCl$_2$ récupéré se présente sous la forme de complexe MgCl$_2 \cdot$nX dans lequel X est le solvant du MgCl$_2$ qui lui est complexé. La valeur de "n", représentant le rapport molaire X/MgCl$_2$, peut évidemment être égale à zéro lorsque le solvant a été éliminé en totalité du MgCl$_2$. Habituellement cette valeur de "n" varie de 0 à 3. Par exemple dans le cas particulier où le tétrahydrofurane est utilisé comme solvant complexant la valeur de "n" recommandée est inférieure ou égale à 2.5 et après séchage du complexe inférieure ou égale à 1,5.

Ce MgCl$_2$ sous forme de complexe avec le solvant complexant peut être utilisé tel quel dans le cas où il sert de support de métal de transition pour les composantes de catalyseur du type Ziegler-Natta.

Pour la mise en suspension du MgCl$_2$, il est entendu par l'expression solvant complexant non seulement l'emploi d'un seul solvant complexant mais encore le mélange de plusieurs de ces composés. Il est possible d'ajouter au solvant complexant un composé miscible, inerte vis à vis du solvant complexant, tel qu'un hydrocarbure contenant de 6 à 30 atomes de carbone qui peut être choisi parmi les hydrocarbures linéaires ou cycliques, saturés ou insaturés, comme l'heptane, le cyclohexane, le toluène, le benzène ou leurs dérivés comme le durène ou le xylène ou encore parmi les composés comportant un ou plusieurs hétéroatomes comme les éthers, les esters, les amines, les silanes.

A l'examen aux rayons X le composé moléculaire à base de MgCl$_2$ est un produit cristallin.

En particulier, le spectre de rayons X de diffraction du composé MgCl$_2 \cdot$1,5THF (tétrahydrofurane) présente les principales raies de diffraction suivantes :

| Position en $2\theta$ | Intensité relative |
|---|---|
| 9,25 | 59,9 |
| 9,50 | 100,00 |
| 16,96 | 15,5 |
| 20,27 | 29,2 |
| 22,45 | 23,76 |
| 24,45 | 15,77 |
| 25,27 | 24,98 |
| 32,19 | 36,57 |
| 32,34 | 19,02 |
| 38,77 | 18,99 |
| 39,77 | 18,53 |

La largeur des pics à mi-hauteur, caractéristique de la taille des cristallites, est de 0,169 ± 0,006 pour la raie à 9,25 et 1,21 ± 0,003 pour la raie à 9,50.

Les mesures sont effectuées au moyen d'un appareil INEL CPS-160, sous une tension de 40 kv et une intensité de 35 mA, en utilisant la raie K$\alpha$ d'une anticathode de cuivre et une calibration au silicium. Le spectre INEL est indexé grâce au programme informatique PROLIX et affiné selon le profit PEARSON VII.

De par sa structure originale, le MgCl$_2$ obtenu présente les mêmes avantages qu'un MgCl$_2$ de forme sphérique tout en atténuant ses inconvénients. Afin d'obtenir une bonne coulabilité, mesurée selon la norme ASTM D1895, du MgCl$_2$ , et plus particulièrement du polymère ou copolymère final, quand il est utilisé comme support catalytique, ont été recherchées des structures particulières du MgCl$_2$. La forme sphérique a été particulièrement recherchée dans le cas de la catalyse pour que la particule finale de polymère ou de copolymère, reproduisant sensiblement de façon homothétique la particule de support, possède cette qualité de coulabilité. L'inconvénient de cette sphéricité est de faciliter l'accumulation des charges électrostatiques dans les réacteurs et les canalisations occasionnant en particulier des collages de poudre aux parois. La structure du MgCl$_2$ selon l'invention permet d'atténuer ce type d'inconvénient.

Une composante catalytique de catalyseur du type Ziegler-Natta peut être obtenue essentiellement par combinaison du MgCl$_2$ selon l'invention avec un composé de métal de transition. C'est ainsi qu'une telle composante peut être obtenue par dépôt sur le MgCl$_2$ d'un composé du titane, du vanadium, du zirconium et/ou d'hafnium, de préférence halogéné et plus particulièrement du TiCl$_4$, TiCl$_3$, du TiCl$_n$(OR)$_{4-n}$ avec $0 \leq n \leq 3$ et R représentant un radical hydrocarboné saturé de 1 à 12 carbones, du VCl$_3$, VCl$_4$ ou VOCl$_3$, HfCl$_4$, ou ZrCl$_4$. Cette composante catalytique associée à un cocatalyseur choisi parmi les composés organométalliques des métaux I à III du tableau périodique et plus particulièrement les composés d'aluminium, sert de catalyseur de polymérisation ou copolymérisation des oléflnes linéaires ou ramifiées comme l'éthylène, le propylène, le butène-1, l'hexène-1, l'octène-1, le 4-méthylpentène-1, le butadiène-1-3, le 1-9 décadiène.

Au moins un donneur d'électrons peut être ajouté à la composante catalytique lors de sa fabrication et/ou au cocatalyseur. Ce donneur d'électrons peut être par exemple choisi parmi les bases de Lewis, les esters et polyesters d'acides oxygénés, les éthers et polyéthers, les amines, les composés du silicium tels que les silanes et les alkylalkoxysilanes de formule SiR$_1$R$_2$(OR)$_2$, SiR$_1$(OR)$_3$ ou SiR$_1$R$_2$R$_3$(OR), les différents R étant des radicaux hydrocarbonés de 1 à 12 carbones, ainsi que les composés du phosphore tels que les phosphates et les phosphonates, les préférés étant les esters ou polyesters alcoylés d'acide aromatique, les mono ou diéthers d'alcoyle, les alkoxysilanes et les alkylalkoxysilanes.

Le catalyseur obtenu à partir d'une composante fabriquée à partir du MgCl$_2$ de l'invention convient à tous les types de polymérisation des oléfines : en haute et basse pression, en suspension, en phase gazeuse ou en masse.

La composante catalytique obtenue à partir du MgCl$_2$ selon l'invention est également constituée de particules se présentant, au microscope, sous la forme de polyèdres sensiblement réguliers à six ou huit faces dont les faces deux à deux symétriquement opposées sont sensiblement parallèles et dont deux grandes faces allongées formant la face du dessus et la face du dessous d'un polyèdre, telles que dans chacune la plus grande diagonale (D) soit supérieure à la plus petite distance (d) séparant deux cotés opposés, sont entourées sensiblement perpendiculairement par les autres faces sensiblement rectangulaires formant les cotés dudit polyèdre, la longueur du plus petit coté (e) de chacune desdites faces sensiblement rectangulaire étant inférieure à la plus petite distance (d) séparant deux cotés opposés des grandes faces allongées.

Les faces deux à deux symétriquement opposées d'un polyèdre étant sensiblement parallèles, lesdites faces peuvent être considérées de fait comme géométriquement sensiblement identiques.

4

La plus grande diagonale (D) de chacune des deux grandes faces allongées d'un polyèdre est habituellement de 5 à 70 $\mu$m. La plus petite distance (d) séparant deux cotés opposés de chacune de ces deux grandes faces est habituellement de 2 à 30 $\mu$m. La longueur du plus petit coté (e) de chacune des autres faces formant le polyèdre, longueur que l'on peut également considérer comme l'épaisseur des particules de composante catalytique, est habituellement de 1 à 10 $\mu$m. Ces dimensions des particules de composante catalytique sont bien entendu associées de façon à respecter la définition du polyèdre et en conséquence telles que de préférence le rapport $\frac{D}{d}$ est de 2 à 7 et le rapport $\frac{d}{e}$ est de 1 à 3.

Les Figures 1 et 2 en annexe schématisent ces particules de composante catalytique.

La composante catalytique est constituée généralement à plus de 90 % en nombre de particules formées d'un mélange de polyèdres à six et huit faces tels que défini. Il n'est d'ailleurs pas exclu que le pourcentage des particules ne repondant pas à la définition ne soit en fait des restes de strates provenant de polyèdres plus ou moins brisés en cours de manipulation.

Ces particules de composante catalytique possèdent une surface sensiblement lisse ; la porosité de ces particules est généralement de 0,1 à 2 cm$^3$/g et mieux de 0,2 à 1,5 cm$^3$/g. La surface spécifique de la composante catalytique est habituellement de 1 à 600 m$^2$/g et mieux de 1 à 50 m$^2$/g.

La taille des particules selon la technique MALVERN de composante catalytique est généralement de 5 à 70 $\mu$m et mieux de 10 à 50 $\mu$m pour une distribution granulométrique resserrée. Habituellement la largeur de distribution granulométrique

$$\underline{\frac{D90}{D10}}$$

telle que déjà définie est inférieure à 15 et plus généralement inférieure à 10.

La composante catalytique peut avantageusement être préparée par imprégnation, de façon connue, des particules de MgCl$_2$ précédemment décrites, par un composé de métal de transition liquide ou en solution comportant un ou plusieurs atomes d'halogène et particulièrement du chlore. Préalablement à cette imprégnation ou en même temps, il peut être recommandé de procéder au dépôt d'au moins un des donneurs d'électrons déjà cités.

La composante catalytique obtenue, associée à un cocatalyseur classique, habituellement choisi parmi les composes organoaluminiques tels que les aluminoxanes, les aluminosiloxanes, les composés comportant des liaisons Al-R-Al ou R représente un groupement alcoyle, ou, de formule AlXqR's dans laquelle X représente Cl ou OR' avec R' désignant un radical alcoyle en C$_1$ à C$_{16}$ et de préférence C$_1$ à C$_{12}$ tandis que q et s sont des nombres tels que $1 \leq s \leq 3$, $0 \leq q \leq 2$ avec $q + s = 3$, forme un catalyseur adapté à la polymérisation des oléfines et plus particulièrement de l'éthylène, du propylène, du butène-1, du 4-méthyle pentène-1 et de l'hexène-1,de l'octène, du butadiène-1-3, ou, de leurs mélanges. Au cocatalyseur, il n'est pas exclu d'associer au moins un donneur d'électrons tel que défini précédemment. La composante catalytique et le cocatalyseur sont associés dans des proportions telles que le rapport molaire d'aluminium contenu dans le cocatalyseur au métal de transition de ladite composante se situe entre 0,5 et 2000 et de préférence entre 1 à 1000.

La polymérisation des oléfines précitées et en général des oléfines en C$_2$ à C$_{12}$ prises seules ou en mélanges, au moyen du système catalytique défini précédemment peut être mise en oeuvre, en solution ou en suspension dans un milieu liquide inerte et notamment dans un hydrocarbure aliphatique tel que le n-heptane, le n-hexane, l'isohexane, l'isobutane, ou encore en masse dans l'une au moins des oléfines à polymériser maintenue à l'état liquide ou hypercritique.

Les conditions opératoires, notamment températures, pressions, quantité de système catalytique, pour ces polymérisations en phase liquide sont celles qui sont habituellement proposées pour des cas similaires faisant appel à des systèmes catalytiques conventionnels de type Ziegler Natta supporté ou non.

Par exemple pour une polymérisation conduite en suspension ou en solution dans un milieu liquide inerte, on peut opérer à des températures allant jusqu'à 250 °C et sous des pressions allant de la pression atmosphérique à 250 bars. Dans le cas d'une polymérisation en milieu propylène liquide, les températures peuvent aller jusqu'à la température critique et les pressions peuvent être comprises entre la pression atmosphérique et la pression critique. Pour une polymérisation ou copolymérisation de l'éthylène en masse conduisant à des polyéthylènes ou à des copolymères majoritaires en éthylène, on peut opérer à des températures comprises entre 130 °C et 350 °C et sous des pressions allant de 200 à 3500 bars.

Le système catalytique obtenu par association de la composante de métal de transition suivant l'invention avec un cocatalyseur et éventuellement un donneur d'électrons tels que définis plus haut, peut être encore utilisé pour la polymérisation en phase gazeuse des oléfines ou des mélanges d'oléfines, qui viennent d'être cités. En particulier on peut polymériser en phase gazeuse, au contact dudit système catalytique, un mélange d'éthylène ou de propylène et d'une ou plusieurs oléfines en $C_2$ à $C_{12}$ telles que éthylène, propylène, butène-1, hexène-1, méthyl-4 pentène-1 et octène-1, renfermant, lorsqu'il est au contact du système catalytique, une proportion molaire de comonomères en $C_2$ à $C_{12}$ comprise entre 0,1 et 90 %, et de préférence entre 1 et 60 %.

La polymérisation en phase gazeuse de l'oléfine ou des oléfines au contact du système catalytique peut être effectuée dans tout réacteur permettant une polymérisation en phase gazeuse et en particulier dans un réacteur à lit agité et/ou à lit fluidisé. Les conditions de mise en oeuvre de la polymérisation en phase gazeuse, notamment température, pression, injection de l'oléfine ou des oléfines dans le réacteur à lit agité et/ou à lit fluidisé, contrôle de la température et de la pression de polymérisation, sont analogues à celles proposées dans l'art antérieur pour la polymérisation en phase gazeuse des oléfines. On opère généralement à une température inférieure au point de fusion Tf du polymère ou copolymère à synthétiser, et plus particulièrement comprise entre $+20°C$ et $(Tf -5)°C$, et sous une pression telle que l'oléfine ou les oléfines, et éventuellement les autres monomères hydrocarbonés présents dans le réacteur soient essentiellement en phase vapeur.

La polymérisation en solution, en suspension, en masse, ou en phase gazeuse peut être réalisée en présence d'un agent de transfert de chaînes, de manière à contrôler l'indice de fusion du polymère ou copolymère à produire. L'agent de transfert de chaînes préféré est l'hydrogène, que l'on utilise en quantité pouvant aller jusqu'à 90 %, et se situant de préférence entre 0,1 et 60 % du volume de l'ensemble oléfines et hydrogène amené au réacteur.

La composante de métal de transition suivant l'invention peut également être utilisée pour la préparation d'un prépolymère actif, qui est utilisable seul ou en association avec un cocatalyseur choisi parmi les composés d'aluminium définis précédemment.

Ledit prépolymère actif est obtenu en mettant en contact une ou plusieurs alpha-oléfines en $C_2$ à $C_{12}$ avec un système catalytique formé en associant la composante de métal de transition suivant l'invention avec un cocatalyseur choisi parmi les composés cités plus haut dans ce but et employés dans les proportions indiquées précédemment, ladite oléfine ou lesdites oléfines en $C_2$ à $C_{12}$ étant utilisées en quantité représentant 2 à 500 grammes et de préférence 2 à 100 grammes de l'oléfine ou des oléfines en $C_2$ à $C_{12}$ par gramme de la composante de métal de transition.

La composante catalytique selon l'invention est particulièrement intéressante dans la polymérisation ou la copolymérisation de l'éthylène ou du propylène ou de leurs mélanges entre eux ou avec une autre oléfine en ce qu'elle permet d'obtenir des polymères ou des copolymères de granulométrie étroite avec absence de fines particules, de bonne coulabilité et d'indice de fusion adapté aux applications habituelles.

Les polyoléfines ou les copolymères d'oléfines obtenus sont constitués de particules dont la taille moyenne est généralement comprise de 100 à 3000 $\mu$m et plus particulièrement de 200 à 2000 $\mu$m. Habituellement la largeur de distribution granulométrique

$$\frac{D90}{D10}$$

des poudres est inférieure à 15 et plus généralement inférieure à 10, leur masse volumique apparente (mva), mesurée selon la norme ASTM D1895-méthode A, étant généralement comprise entre 0,3 et 0,6 $g/cm^3$ et mieux entre 0,4 et 0,5 $g/cm^3$. La coulabilité des poudres est élevée avec des valeurs habituellement inférieures ou égales à 20 secondes selon la norme ASTM-D1895. Leur surface spécifique est généralement de 0,1 à 20 $m^2/g$. Leur porosité est comprise entre 0,1 et 1 $cm^3/g$.

Les photos annexées illustrent les différents aspects de l'invention.

La photo 1 illustre au grossissement 2000 une particule de $MgCl_2$ sous forme de polyèdre à huit faces.

La photo 2 illustre au grossissement 6000 une particule de $MgCl_2$ sous forme de polyèdre à six faces.

La photo 3 illustre au grossissement 150 un ensemble de particules de $MgCl_2$. Plus de 90 % des particules du $MgCl_2$ obtenu répondent à la définition qui leur est donnée.

La photo 4 illustre au grossissement 540 des particules ayant subi un traitement de croissance.

La photo 5 illustre au grossissement 200 un ensemble de particules de composante catalytique.

La mesure du diamètre moyen des particules et de la largeur de la distribution granulométrique

$$\frac{D90}{D10}$$

est effectuée au moyen d'un granulomètre à laser MALVERN 1600. La surface spécifique est mesurée par l'adsorption physique isotherme d'azote à la température de l'azote liquide, méthode BET, sur un appareil QUANTASORB. Le volume poreux est déterminé par intrusion de mercure sous pression avec un porosimètre ERBASCIENCE 1500. Les mesures sont effectuées après traitement sous vide des échantillons pendant 2 heures à la température ambiante.

Les exemples suivants illustrent l'invention sans toutefois la limiter.

EXEMPLE 1

Dans un réacteur de 5 litres, régulé thermiquement par double-enveloppe, muni à sa partie inférieure d'une plaque filtrante et d'une agitation mécanique à pales, on introduit sous azote :
- 300 g de chlorure de magnésium anhydre du commerce, contenant 0,3 % d'eau et de dimension moyenne de 2 millimètres,
- 2 litres de tétrahydrofurane (THF)

L'agitation est portée à 150 tr/min et la température à 65°C.

Après 7 heures de réaction, la suspension est filtrée et le solide récupéré après lavage à l'hexane et séchage sous courant d'azote. On récupère 530 g de solide blanc pulvérulent de bonne coulabilité, de composition molaire $MgCl_2$, 1,5 THF et de mva de 0,59 g/cm$^3$.

L'analyse granulométrique donne les valeurs suivantes : taille moyenne des particules de 41 $\mu$m avec une largeur de distribution granulométrique exprimée par le rapport D90/D10 de 4,3.

Les particules se présentent au microscope électronique à balayage, sous forme de polyèdres à 6 ou 8 faces, tels qu'illustrés par les photos 1 à 3.

EXEMPLE 2

Les conditions opératoires de l'Exemple 1 sont reprises, excepté la température réactionnelle qui est limitée à 50°C. De la même façon on obtient 525 g de support sec de mva 0,6, de taille moyenne de 45 $\mu$ et d'une largeur de distribution granulométrique de 5,0. Le rapport molaire THF sur $MgCl_2$ est toujours de 1,5. La morphologie des particules est conservée.

EXEMPLE 3

L'Exemple 1 est repris, excepté le fait qu'à la fin de la réaction et avant la filtration, on ajoute par coulée lente, 1 litre d'heptane.

Le solide sec récupéré possède les caractéristiques suivantes : mva 0,55, taille moyenne de 44 $\mu$m, et une largeur de distribution granulométrique de 4,3. La morphologie des particules est conservée.

EXEMPLE 4

L'Exemple 1 est repris, sauf que le THF est remplacé par un mélange THF/heptane à 20 % en poids d'heptane.

Les caractéristiques du solide sec récupéré sont : mva 0,60 g/cm$^3$, taille moyenne de 33 $\mu$m et largeur de distribution granulométrique de 5,8. La morphologie des particules est conservée.

EXEMPLE 5

L'Exemple 1 est repris, sauf que le THF est remplacé par un mélange THF/heptane à 33 % d'heptane. Le solide sec possède les caractéristiques suivantes : mva de 0,59 g/cm$^3$, taille moyenne de 23 $\mu$m et une largeur de distribution granulométrique de 6,0. La morphologie des particules est conservée.

EXEMPLE 6

L'Exemple 1 est repris avec ajout de 45 grammes de 1,2,4,5 tétraméthylbenzène. Après séchage, le solide possède les caractéristiques suivantes : mva de 0,6 g/cm$^3$, taille moyenne de 40 $\mu$m et une largeur de distribution granulométrique de 5,0. La morphologie des particules est conservée.

EXEMPLE 7

L'Exemple 1 est repris, sauf en ce qui concerne le THF qui est remplacé par un mélange de THF et de tétrahydropyranne (THP) à 10 % de THP.

Le solide récupéré après séchage possède les caractéristiques suivantes : mva 0,22 g/cm$^3$, taille moyenne de 38 $\mu$m et une largeur de distribution granulométrique de 3,7. La morphologie des particules est conservée.

EXEMPLE 8

L'Exemple 1 est repris, avec l'addition de 300 g de diisobutylphtalate (DBP) 45 g de 1,2,4,5 tétraméthylbenzène au mélange MgCl$_2$ et THF.

Après séchage, on récupère un solide de composition molaire (MgCl$_2$/THF/DBP) de (1/1/0,03). La mva est de 0,65 g/cm$^3$ et la taille moyenne de 40 $\mu$m avec une largeur de distribution granulométrique de 5,4. La morphologie des particules est conservée.

EXEMPLE 9

L'Exemple 1 est repris. Le solide sec récupéré est à nouveau traité par une solution de triéthylaluminium dans l'heptane telle que la concentration en triéthylaluminium est de 20 % en poids et que le rapport molaire Aluminium/THF est de 2. Après 2 heures de réaction à 80°C, on récupère un solide dont les caractéristiques après séchage sont les suivantes : mva de 0,8 g/cm$^3$, une taille moyenne de 30 $\mu$m et une largeur de distribution granulométrique de 5. Le rapport molaire THF sur MgCl$_2$ est voisin de 0. La morphologie des particules est conservée.

EXEMPLE 10

L'Exemple 1 est repris. Le solide sec pulvérulent est mis en fluidisation sous courant d'azote à la pression atmosphérique et à la température de 150°C pendant 4 heures.

On récupère un solide pulvérulent de mVa égale à 0,45 g/cm$^3$ avec une taille moyenne de 32 $\mu$m et une largeur de distribution granulométrique de 6. La morphologie est conservée. Le rapport molaire THF sur MgCl$_2$ est de 0,2.

EXEMPLE 11

A 13,8 g de solide préparé tel que décrit dans l'Exemple 1, on additionne 30 ml d'heptane et 2,5 ml de di-n-butylphtalate. L'ensemble est agité pendant 2 heures à 100°C. Après réaction, on ajoute 40 ml de TiCl$_4$ pur et on poursuit la réaction pendant 2 nouvelles heures à la même température. A la fin, on abaisse la température à 80°C, on laisse décanter le solide et on siphonne la phase surnageante. Le solide est repris deux fois par une solution de TiCl$_4$ dans le 1-2 dichloroéthane à 10 % en volume de TiCl$_4$ à 85°C pendant 2 heures. Après décantation et siphonnage le solide est lavé par de l'hexane à température ambiante. Le solide catalytique est enfin séché sous vide à température ambiante jusqu'à obtention d'une poudre sèche de bonne coulabilité. L'analyse du solide conduit à 2,5 % de Titane, 20 % de magnésium, 67,6 % de chlore. L'analyse granulométrique du solide catalytique obtenu conduit à un diamètre moyen des particules de 32 $\mu$m et à une largeur définie par le rapport D90/D10 de 4,0. La morphologie des particules de solide catalytique est identique à celle du support et telle qu'illustrée par la photo 5.

EXEMPLE 12

10 grammes de support, préparés selon l'Exemple 6, sont mis en suspension dans l'heptane. On ajoute alors du di-n-butylphtalate de façon à ce que la concentration en diester soit de 0,4 M/l et le rapport molaire THF/diester de 7.

On laisse la réaction se dérouler pendant 3 heures à 80°C sous agitation. On procède alors à la filtration de la suspension. On introduit 100 ml de TiCl$_4$ pur et on laisse sous agitation pendant 2 heures à 90°C. Après une nouvelle filtration, on procède à 5 lavages par 100 ml d'une solution de TiCl$_4$ dans le 1-2-dichloroéthane à 10 % en volume de TiCl$_4$, pendant 1 heure chacun à 80°C.

Après filtration, le solide est lavé avec l'hexane et séché sous courant d'azote à 80°C. On récupère un solide vert-jaune dont l'analyse conduit à des taux de Ti, Mg et Cl respectivement de 2,3, 19,5 et 65 % en poids. Le diamètre moyen des particules est de 26 μm et la largeur granulométrique de 4,3. La morphologie des particules est comparable à celle illustrée par la photo 5.

EXEMPLE 13

Dans un réacteur de 1,5 litre en inox, muni d'une agitation à ancre avec un entrainement magnétique et une régulation thermique par double enveloppe, on introduit sous courant de propylène gazeux, 1 litre d'heptane, 6 mmoles de triéthylaluminium et 0,6 mmole de cyclohexyle méthyle diméthoxysilane. 15 mg du solide catalytique préparé selon l'Exemple 11 sont alors introduits ainsi que 50 ml d'hydrogène gazeux. La température est portée à 70°C. On introduit le propylène gazeux à concurrence de 4 bars relatifs. Tout au long de la réaction, la pression du réacteur est maintenue par un apport continu de monomère.

Au bout de 90 minutes de réaction, la température est abaissée à 20°C et la pression à la pression atmosphérique.

Le polymère insoluble dans l'heptane est récupéré par filtration, séché et pesé. La solution heptanique est évaporée de façon à récupérer le polymère éventuellement solubilisé.

On obtient ainsi 50,4 grammes de poudre pulvérulente de très bonne coulabilité, de diamètre moyen de 400 μm, de largeur de distribution granulométrique de 4,5. De la solution heptanique on récupère 0,6 gramme de polypropylène soluble. Après extraction au KUMAGAWA avec de l'heptane, du polymère soluble de la poudre précédente, on calcule un indice total d'isotacticité de 97,7 %. Le melt index mesuré suivant la norme ASTM D1238 méthode L est de 3,5. La masse volumique apparente mesurée suivant la norme ASTM D1895 méthode A est de 0,40 et la coulabilité de 18 secondes.

EXEMPLE 14

Dans un réacteur thermostaté de 8 litres, équipé d'une agitation à pales et d'un entrainement magnétique, on introduit à 30°C, dans l'ordre, 2,4 litres d'hydrogène gazeux, 6 litres de propylène liquide, 18 mM de triethylaluminium et 1,8 mM de cyclohexyle méthyle diméthoxysilane. Après un précontact de 10 minutes, 70 mg de la composante catalytique décrite à l'Exemple 12 sont injectés dans le réacteur. La température est portée rapidement à 70°C et maintenue pendant 1 heure à cette valeur.

A la fin de la réaction, le réacteur est refroidi et la pression abaissée à la pression atmosphérique. On récupère 2250 grammes d'une poudre pulvérulente d'excellente coulabilité (17 secondes suivant norme ASTM D1895), de mva élevée 0,47 (norme ASTM D1895 méthode A), et d'un indice d'isotacticité, mesuré par extraction à l'heptane du polymère amorphe à l'aide d'un appareil KUMAGAWA, de 97,8 % en poids. Le melt index du polymère mesuré suivant la norme ASTM D1238 méthode L est de 2,9.

Le polymère présente les caractéristiques suivantes : un diamètre moyen de 900 μm et une largeur de 5. La majeure partie des particules possède un rapport $\frac{D}{d}$ compris entre 1,5 et 2,5.

EXEMPLE 15

L'Exemple 1 est repris, sauf que le THF est remplacé par un mélange THF/EDIA (éther diisoamylique) dans un rapport volumique 14/1. Les caractéristiques du solide récupéré sont : mva 0,559 g/cm$^3$, taille moyenne de 50 μm et largeur de distribution granulométrique D90/D10 de 5,7. La morphologie des particules est conservée.

EXEMPLE 16

L'Exemple 1 est repris, sauf que le THF est remplacé par un mélange THF/PMHS (polymethylhydrogenosiloxane) dans un rapport volumique de 15/1.

Les caractéristiques du solide récupéré sont : mva de 0,5 g/cm$^3$, taille moyenne de 37 μm et largeur de distribution granulométrique D90/D10 de 6,6. La morphologie des particules est conservée.

EXEMPLE 17

A 20 g du solide préparé selon l'Exemple 1, on ajoute 100 ml de TiCl$_4$ pur. On agite 1 heure à 90°C. Puis on procède à huit lavages à 80°C avec 50 ml d'un mélange volumique 10/90 de TiCl$_4$/DCE (dichloroéthane). Au terme de ces traitements on lave deux fois avec 100 cc d'hexane. Le solide est isolé par filtration, puis séché sous courant d'azote à 50°C.

L'analyse du solide catalytique donne une teneur en Ti de 3,8 %, de 17 % en Mg et 61,2 % en Cl. Le diamètre moyen des particules de solide catalytique est de 27 $\mu$m et la largeur de distribution est de 3,9.

EXEMPLE 18

Dans le réacteur décrit dans l'Exemple 13 on introduit à 40°C sous courant d'azote, 1 litre d'hexane, 6 mM de triisobutylaluminium, 29 mg de catalyseur obtenu selon l'Exemple 17. On élève la pression d'azote à 2 bars de pression totale et l'on règle la température à 80°C. On ajuste à l'équilibre de température la pression à 3 bars par apport d'azote. On ajoute 4 bars relatifs d'hydrogène et 6 bars d'éthylène. La pression est maintenue constante à 13 bars absolus par rapport d'éthylène.

Au bout de 120 minutes de réaction, on abaisse la température à 40°C et on décomprime le réacteur à pression atmosphérique. On récupère 646 g de polymère après filtration et séchage.

La productivité est de 22275 g PE/g catalyseur et le diamètre moyen de la poudre est de 542 microns pour une masse volumique apparente de 0,319 g/cm$^3$.

Les indices de fusion à 190°C sous charge de 2,16 kg et 5 kg sont respectivement de 0,7 et de 4,68.

EXEMPLE 19

On opère comme dans l'Exemple 18 sauf que l'on introduit 20 mg de catalyseur préparé dans l'Exemple 11.

La réaction de polymérisation est poursuivie 180 mm et l'on récupère en fin de réaction 405 g de polyéthylène, soit une productivité de 20250 g PE/G catalyseur. Le diamètre moyen du polymère est de 521 microns pour une mVa de 0,311 g/cm$^3$.

Les indices de fusion à 190°C sous charge de 2,16 kg et sous charge de 5 kg sont respectivement 0,87 et 2,85.

EXEMPLE 20

a) Synthèse d'un prépolymère

Dans un réacteur du même type que celui utilisé dans l'Exemple 13 on introduit sous courant d'azote à 40°C :

0,8 litre d'hexane sec

14 mM de THA (trihexylaluminium)

1 g de catalyseur obtenu dans l'Exemple 11 On introduit ensuite

2 bars relatifs d'hydrogène

Puis on introduit un débit contrôlé d'éthylène selon la séquence suivante :

1,2 l/h durant 30 mn

2 l/h durant 30 mn

4 l/h durant 30 mn

8 l/h durant 30 mn

16 l/h durant 30 mn

30 l/h durant 130 mn

Le réacteur est décomprimé et l'hexane est évaporé sous courant d'azote à 70°C. On recueille 94 g de prépolymère ayant un degré de prépolymérisaiton de 94 g PE/g catalyseur.

b) Synthèse d'un polyéthylène haute densité (PEHD) en phase gazeuse.

On opère dans un réacteur de 8,2 litres thermostaté muni d'une agitation prélablement séché en présence de 20 g de poudre de charge dispersante de polyéthylène provenant d'un essai identique précédent.

Dans ce réacteur maintenu pendant toute la polymérisation à 90°C on injecte sous agitation de 400 t/min et sous vide de 1,33 Pa, de l'hydrogène jusqu'à obtention d'une pression de 6 bars absolus. On injecte ensuite dans le réacteur 8 bars d'éthylène jusqu'à obtention des pressions partielles d'hydrogène et d'éthylène respectives de 6 et 8 bars absolus.

Après ces injections on introduit par poussée d'azote 4 g de prépolymère actif, préparé ci-dessus, l'injection d'azote étant poursuivie jusqu'à ce que la pression totale à l'intérieur du réacteur atteigne 21 bars absolus. La pression est maintenue à cette valeur par injection d'éthylène. Après 120 mn de réaction la polymérisation est arrêtée par décompression du réacteur. On purge à l'azote et on laisse refroidir.

On récupère 359 g de poudre de PEHD charge initiale incluse. La productivité est de 7920 g PE/g catalyseur. La poudre a un diamètre moyen de 495 microns et une mva de 0,359 g/cm$^3$. Les indices de fusion à 190°C sous charge de 2,16 kg et 5 kg sont respectivement de 4,55 et 14,6.

c) Synthèse d'un copolymère éthylène/butène-1 en phase gazeuse

On opère dans un réacteur de 8,2 litres préalablement séché thermostaté muni d'une agitation par pale, en présence de 20 g de poudre de polyéthylène provenant d'un essai identique précédent. Dans ce réacteur maintenu pendant toute la polymérisation à 85°C on injecte sous agitation d'environ 400 t/min sous vide de 1,33 Pa du butène-1 jusqu'à l'obtention d'une pression de 1 bar absolu. On complète l'injection de butène-1 jusqu'à une montée de la pression de 1,5 bar absolu.

On injecte ensuite successivement dans le réacteur 1 bar d'hydrogène et 4,5 bars d'éthylène jusqu'à obtention des pressions partielles respectives d'hydrogène et d'éthylène de 1 et 4,5 bars. Après ces injections on introduit 3 g de prépolymère actif par poussée à l'azote, l'injection d'azote étant poursuivie jusqu'à ce que la pression totale à l'intérieur du réacteur atteigne 21 bars absolus. La pression est maintenue à cette valeur par introduction d'un mélange butène-1/éthylène dans un rapport molaire de 0,0466. Après 120 min de réaction la polymérisation est arrêtée par décompression du réacteur. On purge à l'azote et on laisse refroidir.

On récupère 372 g de copolymère éthylène/butène-1 charge initiale incluse. La productivité est de 11000 g PE/g catalyseur et la densité de 0,918 g/cm$^3$. La poudre a un diamètre moyen de 407 microns et une mVa de 0,290 g/cm$^3$. Les indices de fusion à 190°C sous charge de 2,16 kg et 21,6 kg sont respectivement de 1,35 et 47,1.

EXEMPLE 21

Dans un réacteur de 1 litre équipé d'un agitateur et d'un contrôle de température par circulation de fluide caloporteur en double enveloppe, on additionne à 80°C sous agitation d'environ 100 t/min :

1,3 M de MgCl$_2$ anhydre

0,098 M de durène

9 M de THF

On agite 1h30 à 100 t/min puis 2h30 à 250 t/min.

La suspension est transférée en tube de Schlenk. Un aliquote de cette supension est filtré lavé à l'hexane pour analyser le solide S1 obtenu.

On charge le réacteur avec un aliquote de la suspension obtenue renfermant 90 mM de MgCl$_2$, 623 mM de THF, 6,78 mM de durène. On additionne sous agitation d'environ 150 t/min un volume équivalent d'hexane en 30 min le mélange étant effectué à 60°C.

Puis on ajoute toujours sous agitation en 2h30 à 60°C simultanément :

une coulée de 514 ml d'une solution saturée à 60°C de MgCl$_2$ dans le THF renfermant 20 g de MgCl$_2$

une coulée de 514 ml d'hexane.

En fin de croissance la suspension est refroidie à la température ambiante puis filtrée. Le support est lavé trois fois avec 500 ml d'hexane et séché à 50°C sous courant d'azote. On transfère en tube de schlenk sous azote le support S2. On isole 58 g de complexe MgCl$_2$ • 1,5THF.

| Réf. Support | D90 | diamètre moyen | D 10 | $\dfrac{D90}{D10}$ |
|---|---|---|---|---|
| S1 | 94.1 | 49.55 | 17.28 | 5.4 |
| S2 | 111.6 | 60.4 | 23.43 | 4.8 |

Les particules se présentent au microscope électronique à balayage telles qu'illustrées par la photo 4.

**Revendications**

1.  Particules poreuses de $MgCl_2$ caractérisées en ce qu'elles se présentent, au microscope, sous la forme de polyèdres sensiblement réguliers à six ou huit faces dont les faces deux à deux symétriquement opposées sont sensiblement parallèles et dont deux grandes faces allongées formant la face du dessus et la face du dessous d'un polyèdre, telles que dans chacune la plus grande diagonale (D) soit supérieure à la plus petite distance (d) séparant deux cotés opposés, sont entourées sensiblement perpendiculairement par les autres faces sensiblement rectangulaires formant les cotés dudit polyèdre, la longueur du plus petit coté (e) de chacune desdites faces sensiblement rectangulaires étant inférieure à la plus petite distance (d) séparant les deux cotés opposés des grandes faces allongées.

2.  Particules de $MgCl_2$ selon la revendication 1 caractérisées en ce que les faces deux à deux symétriquement opposées sont géométriquement sensiblement identiques.

3.  Particules de $MgCl_2$ selon l'une des revendications 1 ou 2 caractérisées en ce que le rapport

$$\frac{(D)}{(d)}$$

est de 2 à 7.

4.  Particules de $MgCl_2$ selon l'une des revendications 1 à 3 caractérisées en ce que le rapport

$$\frac{(d)}{(e)}$$

est de 1 à 3.

5.  Particules de $MgCl_2$ selon l'une des revendications 1 à 4 caractérisées en ce que (D) est de 10 à 100 $\mu$m.

6.  Particules de $MgCl_2$ selon l'une des revendications 1 à 5 caractérisées en ce que (d) est de 4 à 40 $\mu$m.

7.  Particules de $MgCl_2$ selon l'une des revendications 1 à 6 caractérisées en ce que (e) est de 2 à 20 $\mu$m.

8.  Particules de $MgCl_2$ selon l'une des revendications 1 à 7 caractérisées en ce qu'elles constituent à plus de 90 % en nombre un mélange de polyèdres à six et huit faces.

9.  Particules de $MgCl_2$ selon l'une des revendications 1 à 8 caractérisées en ce que leur porosité est de 0,1 à 1 $cm^3$/g.

10. Particules de $MgCl_2$ selon l'une des revendications 1 à 9 caractérisées en ce que leur surface spécifique est de 0,5 à 10 $m^2$/g.

11. Particules de $MgCl_2$ selon l'une des revendications 1 à 10 caractérisées en ce que la taille des particules est de 10 à 100 $\mu$m avec une largeur de distribution granulométrique inférieure à 15.

$$\frac{D90}{D10}$$

12. Particules de complexe $MgCl_2,nX$ dans lesquelles X est un solvant du $MgCl_2$ qui lui est complexé, caractérisé en ce que "n" est tel que la quantité en poids de solvant complexé au $MgCl_2$ permette au

complexe de conserver sa forme cristalline et en ce qu'elle se présente, au microscope, sous la forme de polyèdres répondant à l'une des revendications 1 à 11.

13. Particules selon la revendication 12 caractérisées en ce que "n" est une valeur de 0 à 3, la valeur 0 étant exclue.

14. Procédé d'obtention des particules selon la revendication 12 ou 13 consistant a mettre des particules de $MgCl_2$ dans au moins un des solvants complexants de $MgCl_2$, le rapport molaire solvant sur $MgCl_2$ étant inférieur au rapport de solubilité de ces deux corps à la température de la suspension, ladite suspension étant maintenue pendant un temps suffisant pour permettre le gonflement à coeur des particules par le solvant complexant.

15. Procédé selon la revendication 14 caractérisé en ce que la suspension est réalisée sensiblement à une température de (Teb -30°C) à (Teb +40°C), Teb étant la température d'ébullition du solvant complexant à la pression atmosphérique.

16. Procédé selon la revendication 14 ou 15 caractérisé en ce que la suspension est un milieu biphasique tel qu'il contienne suffisamment de solvant complexant pour maintenir du $MgCl_2$ en suspension.

17. Procédé selon l'une des revendications 14 à 16 caractérisé en ce que pour faire grossir les particules sans en changer leur morphologie on ajoute à la suspension, sensiblement simultanément, d'une part une solution de $MgCl_2$ dans un solvant complexant et d'autre part un liquide inerte non solvant du $MgCl_2$ et miscible au solvant complexant.

18. Procédé d'obtention de particules de $MgCl_2$ caractérisé en ce qu'on élimine le solvant complexant des particules de complexe $MgCl_2,nX$ obtenues selon le procédé de l'une des revendications 14 à 17.

19. Composante catalytique essentiellement constituée de particules de $MgCl_2$ imprégnées d'un composé de métal de transition et plus particulièrement d'un composé halogéné de titane, et, éventuellement d'un donneur d'électrons caractérisée en ce que ses particules se présentent, au microscope sous la forme de polyèdres sensiblement réguliers à six ou huit faces dont les faces deux à deux symétriquement opposées sont sensiblement parallèles et dont deux grandes faces allongées formant la face du dessus et la face du dessous d'un polyèdre, telles que dans chacune la plus grande diagonale (D) soit supérieure à la plus petite distance (d) séparant deux cotés opposés, sont entourées sensiblement perpendiculairement par les autres faces sensiblement rectangulaires formant les cotés dudit polyèdre, la longueur du plus petit coté (e) de chacune desdites faces sensiblement rectangulaires étant inférieure à la plus petite distance (d) séparant deux cotés opposés des grandes faces allongées.

20. Composante catalytique selon la revendication 19 caractérisée en ce que les faces deux à deux symétriquement opposées sont géométriquement sensiblement identiques.

21. Composante catalytique selon l'une des revendications 19 ou 20 caractérisée en ce que le rapport

$$\frac{(D)}{(d)}$$

est de 2 à 7.

22. Composante catalytique selon l'une des revendications 19 à 21 caractérisée en ce que le rapport

$$\frac{(d)}{(e)}$$

est de 1 à 3.

**23.** Composante catalytique selon l'une des revendications 19 à 22 caractérisée en ce que (D) est de 5 à 70 $\mu$m.

**24.** Composante catalytique selon l'une des revendications 19 à 23 caractérisée en ce que (d) est de 2 à 30 $\mu$m.

**25.** Composante catalytique selon l'une des revendications 19 à 24 caractérisée en ce que (e) est de 1 à 10 $\mu$m.

**26.** Composante catalytique selon l'une des revendications 19 à 25 caractérisée en ce qu'elle est constituée à plus de 90 % en nombre d'un mélange de polyèdres à six et huit faces.

**27.** Composante catalytique selon l'une des revendications 19 à 26 caractérisée en ce que la porosité de ses particules est de 0,1 à 2 cm$^3$/g.

**28.** Composante catalytique selon l'une des revendications 19 à 27 caractérisée en ce que sa surface spécifique est de 1 à 600 m$^2$/g.

**29.** Composante catalytique selon l'une des revendications 19 à 28 caractérisée en ce que la taille de ses particules est de 5 à 70 $\mu$m avec une largeur de distribution granulométrique

$$\underline{\frac{D90}{D10}}$$

inférieure à 15

**30.** Composante catalytique selon l'une des revendications 19 à 29 caractérisée en ce qu'elle est obtenue par imprégnation d'un composé de métal de transition et plus particulièrement d'un composé halogéné du titane sur des particules d'une des revendications 1 à 13 ou obtenues selon l'une des revendications 14 à 17.

**31.** Procédé de polymérisation d'une ou plusieurs oléfines en C$_2$ à C$_{12}$ en présence d'un système catalytique constitué d'une composante catalytique contenant du MgCl$_2$ et un composé de métal de transition, et, d'un cocatalyseur à base d'un composé organique d'aluminium caractérisé en de que la composante catalytique est choisie parmi les composantes catalytiques d'une des revendications 19 à 30 ou obtenue à partir de particules d'une des revendications 1 à 13.

**32.** Procédé d'obtention de Polypropylène selon la revendication 31 caractérisé en ce que la majorité des particules possède un rapport

$$\frac{.(D)}{(d)}$$

compris entre 1,5 et 2,5.

**Claims**

**1.** Porous particles of MgCl$_2$, characterized in that, in the microscope, they are in the form of substantially regular polyhedra with six or eight faces in which the symmetrically opposed pairs of faces are substantially parallel and in which two large elongate faces forming the top face and the bottom face of a polyhedron, which are such that in each the largest diagonal (D) is higher than the smallest distance (d) separating two opposite sides, are surrounded substantially perpendicularly by the other substantially rectangular faces forming the sides of the said polyhedron, the length of the smallest side (e) of each of the said substantially rectangular faces being lower than the smallest distance (d) separating the two opposite sides of the large elongate faces.

14

2. Particles of $MgCl_2$ according to Claim 1, characterized in that the symmetrically opposed pairs of faces are geometrically substantially identical.

3. Particles of $MgCl_2$ according to either of Claims 1 and 2, characterized in that the ratio (D)/(d) is from 2 to 7.

4. Particles of $MgCl_2$ according to one of Claims 1 to 3, characterized in that the ratio (d)/(e) is from 1 to 3.

5. Particles of $MgCl_2$ according to one of Claims 1 to 4, characterized in that (D) is from 10 to 100 $\mu$m.

6. Particles of $MgCl_2$ according to one of Claims 1 to 5, characterized in that (d) is from 4 to 40 $\mu$m.

7. Particles of $MgCl_2$ according to one of Claims 1 to 6, characterized in that (e) is from 2 to 20 $\mu$m.

8. Particles of $MgCl_2$ according to one of Claims 1 to 7, characterized in that more than 90 % of their number consist of a mixture of polyhedra with six and eight faces.

9. Particles of $MgCl_2$ according to one of Claims 1 to 8, characterized in that their porosity is from 0.1 to 1 $cm^3$/g.

10. Particles of $MgCl_2$ according to one of Claims 1 to 9, characterized in that their specific surface is from 0.5 to 10 $m^2$/g.

11. Particles of $MgCl_2$ according to one of Claims 1 to 10, characterized in that the size of the particles is from 10 to 100 $\mu$m with a particle size distribution width D90/D10 lower than 15.

12. Particles of complex $MgCl_2,nX$, in which X is a solvent for $MgCl_2$ which is complexed therewith, characterized in that "n" is such that the quantity by weight of solvent complexed with $MgCl_2$ allows the complex to preserve its crystalline form and in that, in the microscope, it is in the form of polyhedra corresponding to one of Claims 1 to 11.

13. Particles according to Claim 12, characterized in that "n" is a value from 0 to 3, the value 0 being excluded.

14. Process for obtaining the particles according to Claim 12 or 13, consisting of placing particles of $MgCl_2$ in at least one of the complexing solvents for $MgCl_2$, the molar ratio of solvent to $MgCl_2$ being lower than the solubility ratio of these two substances at the temperature of the suspension, the said suspension being maintained for a sufficient period to permit the swelling of the particles to the core by the complexing solvent.

15. Process according to Claim 14, characterized in that the suspension is produced substantially at a temperature of ($T_b$ -30 $^\circ$C) to ($T_b$ + 40 $^\circ$C), $T_b$ being the boiling temperature of the complexing solvent at atmospheric pressure.

16. Process according to Claim 14 or 15, characterized in that the suspension is a two-phase medium such that it contains sufficient complexing solvent to maintain $MgCl_2$ in suspension.

17. Process according to one of Claims 14 to 16, characterized in that in order to make the particles grow without changing their morphology thereby, there are added to the suspension, substantially simultaneously, on the one hand a solution of $MgCl_2$ in a complexing solvent and, on the other hand, an inert liquid which is non-solvent for $MgCl_2$ and is miscible with the complexing solvent.

18. Process for obtaining particles of $MgCl_2$, characterized in that the complexing solvent is removed from the particles of complex $MgCl_2,nX$ which are obtained according to the process of one of Claims 14 to 17.

**19.** Catalytic component essentially consisting of particles of $MgCl_2$ impregnated with a transition metal compound and more particularly with a titanium halogen compound and, optionally, of an electron-donor, the component being characterized in that, in the microscope, its particles are in the form of substantially regular polyhedra with six or eight faces in which the symmetrically opposed pairs of faces are substantially parallel and in which two large elongate faces forming the top face and the bottom face of a polyhedron, which are such that in each the largest diagonal (D) is higher than the smallest distance (d) separating two opposite sides, are surrounded substantially perpendicularly by the other substantially rectangular faces forming the sides of the said polyhedron, the length of the smallest side (e) of each of the said substantially rectangular faces being lower than the smallest distance (d) separating two opposite sides of the large elongate faces.

**20.** Catalytic component according to Claim 19, characterized in that the symmetrically opposed pairs of faces are geometrically substantially identical.

**21.** Catalytic component according to either of Claims 19 and 20, characterized in that the ratio (D)/(d) is from 2 to 7.

**22.** Catalytic component according to one of Claims 19 to 21, characterized in that the ratio (d)/(e) is from 1 to 3.

**23.** Catalytic component according to one of Claims 19 to 22, characterized in that (D) is from 5 to 70 $\mu$m.

**24.** Catalytic component according to one of Claims 19 to 23, characterized in that (d) is from 2 to 30 $\mu$m.

**25.** Catalytic component according to one of Claims 19 to 24, characterized in that (e) is from 1 to 10 $\mu$m.

**26.** Catalytic component according to one of Claims 19 to 25, characterized in that more than 90 % of its number consist of a mixture of polyhedra with six and eight faces.

**27.** Catalytic component according to one of Claims 19 to 26, characterized in that the porosity of its particles is from 0.1 to 2 $cm^3$/g.

**28.** Catalytic component according to one of Claims 19 to 27, characterized in that its specific surface is from 1 to 600 $m^2$/g.

**29.** Catalytic component according to one of Claims 19 to 28, characterized in that the size of its particles is from 5 to 70 $\mu$m with a particle size distribution width D90/D10 lower than 15.

**30.** Catalytic component according to one of Claims 19 to 29, characterized in that it is obtained by impregnation of a transition metal compound and more particularly of a titanium halogen compound onto particles of one of Claims 1 to 13 or which are obtained according to one of Claims 14 to 17.

**31.** Process for polymerization of one or more $C_2$-$C_{12}$ olefins in the presence of a catalyst system consisting of a catalytic component containing $MgCl_2$ and a transition metal compound, and of a cocatalyst based on an organic aluminium compound, characterized in that the catalytic component is chosen from the catalytic components of one of Claims 19 to 30 or is obtained from particles of one of Claims 1 to 13.

**32.** Process for obtaining polypropylene according to Claim 31, characterized in that the majority of the particles have a (D)/(d) ratio of between 1.5 and 2.5.

**Patentansprüche**

**1.** Poröse $MgCl_2$-Teilchen, dadurch gekennzeichnet, daß sie eine unter dem Mikroskop erkennbare, ungefähr gleichmäßige polyedrische Form mit sechs oder acht Flächen besitzen, wobei die sich jeweils symmetrisch gegenüberstehenden Flächen etwa parallel zueinander sind und die zwei großen spitzzulaufenden Flächen, die die Ober- und Unterseite eines Polyeders bilden, und deren größere Diagonale (D) jeweils größer ist als der Kleinere Abstand (d) zwischen den zwei gegenüberliegenden Seiten, von den übrigen etwa rechteckigen Flächen, die die Seiten des Polyeders bilden, ungefähr rechtwinklig umgeben sind und die Länge der kleineren Seite (e) jeder dieser in etwa rechteckigen Flächen unterhalb des kleineren Abstands (d) zwischen den zwei gegenüberliegenden Seiten der spitzzulaufenden großen Flächen liegt.

2. $MgCl_2$-Teilchen nach Anspruch 1, dadurch gekennzeichnet, daß die sich symmetrisch gegenüberstehenden Flächen in etwa die gleiche Geometrie aufweisen.

3. $MgCl_2$-Teilchen nach Anspruch 1 oder 2, dadurch gekennzeichnet, daß das Verhältnis (D)/(d) zwischen 2 und 7 liegt.

4. $MgCl_2$-leilchen nach einem der Ansprüche 1 bis 3, dadurch gekennzeichnet, daß das Verhältnis (d)/(e) zwischen 1 und 3 liegt.

5. $MgCl_2$-Teilchen nach einem der Ansprüche 1 bis 4, dadurch gekennzeichnet, daß (D) zwischen 10 und 100 $\mu$m liegt.

6. $MgCl_2$-Teilchen nach einem der Ansprüche 1 bis 5, dadurch gekennzeichnet, daß (d) zwischen 4 und 40 $\mu$m liegt.

7. $MgCl_2$-Teilchen nach einem der Ansprüche 1 bis 6, dadurch gekennzeichnet, daß (e) zwischen 2 und 20 $\mu$m liegt.

8. $MgCl_2$-Teilchen nach einem der Ansprüche 1 bis 7, dadurch gekennzeichnet, daß sie mehr als 90 %, bezogen auf die Gesamtzahl, einer Mischung aus Polyedern mit sechs und acht Flächen ausmachen.

9. $MgCl_2$-Teilchen nach einem der Ansprüche 1 bis 8, dadurch gekennzeichnet, daß ihre Porosität zwischen 0,1 und 1 $cm^3$/g liegt.

10. $MgCl_2$-Teilchen nach einem der Ansprüche 1 bis 9, dadurch gekennzeichnet, daß ihre spezifische Oberfläche zwischen 0,5 und 10 $m^2$/g liegt.

11. $MgCl_2$-Teilchen nach einem der Ansprüche 1 bis 10, dadurch gekennzeichnet, daß die Größe der Teilchen zwischen 10 und 100 $\mu$m bei einer Teilchengrößeverteilung D90/D10 von weniger als 15 liegt.

12. Teilchen eines $MgCl_2 \cdot nX$-Komplexes, wobei X ein Lösungsmittel für $MgCl_2$ ist, das dieses komplexiert, dadurch gekennzeichnet, daß "n" einen Wert annimmt, bei dem die Gewichtsmenge des $MgCl_2$ komplexierenden Lösungsmittel die Beibehaltung der kristallinen Form des Komplexes ermöglicht, die unter dem Mikroskop als Polyederform nach einem der Ansprüche 1 bis 11 erkennbar ist.

13. Teilchen nach Anspruch 12, dadurch gekennzeichnet, daß "n" ein Wert zwischen 0 und 3 ist, wobei der Wert 0 ausgeschlossen ist.

14. Verfahren zur Gewinnung von Teilchen nach Anspruch 12 oder 13, wobei $MgCl_2$-Teilchen in wenigstens ein $MgCl_2$ komplexierendes Lösungsmittel eingebracht werden, wobei das Molverhältnis von Lösungsmittel zu $MgCl_2$ unter dem Löslichkeitsverhältnis der beiden Bestandteile bei der Suspensionstemperatur liegt und die Suspension während eines Zeitraums beibehalten wird, der für das Aufblähen des Teilcheninneren durch das komplexierende Lösungsmittel ausreicht.

15. Verfahren nach Anspruch 14, dadurch gekennzeichnet, daß die Suspension bei ungefähr einer Temperatur von (Teb -30 °C) bis (Teb +40 °C) bereitgestellt wird, wobei Teb die Siedetemperatur des komplexierenden Lösungsmittels bei Atmosphärendruck ist.

16. Verfahren nach Anspruch 14 oder 15, dadurch gekennzeichnet, daß die Suspension ein Zweiphasensystem ist, daß ausreichend komplexierendes Lösungsmittel enthält, um das $MgCl_2$ in Suspension zu halten.

**17.** Verfahren nach einem der Ansprüche 14 bis 16, dadurch gekennzeichnet, daß der Suspension ungefähr gleichzeitig eine $MgCl_2$-Lösung in einem komplexierenden Lösungsmittel und eine inerte, $MgCl_2$ nicht lösende und mit dem komplexierenden Lösungsmittel mischbare Flüssigkeit zugegeben wird, um die Teilchen ohne Morphologieänderung aufblähen zu lassen.

**18.** Verfahren zur Gewinnung von $MgCl_2$-Teilchen, dadurch gekennzeichnet, daß das die mit dem Verfahren nach einem der Ansprüche 14 bis 17 gewonnenen Teilchen des $MgCl_2.nX$-Komplexes komplexierende Lösungsmittel entfernt wird.

**19.** Katalytischer Bestandteil im wesentlichen aus $MgCl_2$-Teilchen, die mit einer Übergangsmetallverbindung und insbesondere mit einer halogenierten Titanverbindung und gegebenenfalls mit einem Elektronendonor imprägniert sind, dadurch gekennzeichnet, daß die Teilchen eine unter dem Mikroskop erkennbare, ungefähr gleichmäßige Polyederstruktur mit sechs oder acht Flächen aufweisen, wobei die sich jeweils symmetrisch gegenüberstehenden Flächen in etwa parallel zueinander sind und die zwei großen, spitzzulaufenden Flächen, die die Ober- und Unterseite eines Polyeders bilden, deren größere Diagonale (D) jeweils größer ist als der kleinere Abstand (d) zwischen zwei gegenüberliegenden Seiten, von den übrigen ungefähr rechteckigen Flächen, die die Seiten des Polyeders bilden in etwa rechtwinklig umgeben sind, wobei die Länge der kleineren Seite (e) jeder der in etwa rechtwinkligen Flächen unterhalb des kleineren Abstands (d) zwischen zwei gegenüberliegenden Seiten der großen, spitzzulaufenden Flächen liegt.

**20.** Katalytischer Bestandteil nach Anspruch 19, dadurch gekennzeichnet, daß die sich jeweils symmetrisch gegenüberstehenden Flächen ungefähr die gleiche Geometrie aufweisen.

**21.** Katalytischer Bestandteil nach Anspruch 19 oder 20, dadurch gekennzeichnet, daß das Verhältnis (D)/(d) zwischen 2 und 7 liegt.

**22.** Katalytischer Bestandteil nach einem der Ansprüche 19 bis 21, dadurch gekennzeichnet, daß das Verhältnis (d)/(e) zwischen 1 und 3 liegt.

**23.** Katalytischer Bestandteil nach einem der Ansprüche 19 bis 22, dadurch gekennzeichnet, daß (D) zwischen 5 und 70 $\mu$m liegt.

**24.** Katalytischer Bestandteil nach einem der Ansprüche 19 bis 23, dadurch gekennzeichnet, daß (d) zwischen 2 und 30 $\mu$m liegt.

**25.** Katalytischer Bestandteil nach einem der Ansprüche 19 bis 24, dadurch gekennzeichnet, daß (e) zwischen 1 und 10 $\mu$m liegt.

**26.** Katalytischer Bestandteil nach einem der Ansprüche 19 bis 25, dadurch gekennzeichnet, daß er mehr als 90 %, bezogen auf die Gesamtanzahl, aus einer Mischung von Polyedern mit sechs und acht Flächen besteht.

**27.** Katalytischer Bestandteil nach einem der Ansprüche 19 bis 26, dadurch gekennzeichnet, daß die Porosität der Teilchen zwischen 0,1 und 2 $cm^3$/g liegt.

**28.** Katalytischer Bestandteil nach einem der Ansprüche 19 bis 27, dadurch gekennzeichnet, daß seine spezifische Oberfläche zwischen 1 und 600 $m^2$/g liegt.

**29.** Katalytischer Bestandteil nach einem der Ansprüche 19 bis 28, dadurch gekennzeichnet, daß die Teilchengröße zwischen 5 und 70 $\mu$m bei einer Teilchengrößeverteilung D90/D10 von unter 15 liegt.

**30.** Katalytischer Bestandteil nach einem der Ansprüche 19 bis 29, dadurch gekennzeichnet, daß er durch Imprägnierung der Teilchen nach einem der Ansprüche 1 bis 13 oder erhalten nach einem der Ansprüche 14 bis 17 mit einer Übergangsmetallverbindung und insbesondere einer halogenierten Titanverbindung gewonnen wird.

**31.** Verfahren zur Polymerisation eines oder mehrerer $C_2$-$C_{12}$-Olefine in Gegenwart eines katalytischen Systems, bestehend aus einem $MgCl_2$ enthaltenden katalytischen Bestandteil und einer Übergangsmetallverbindung und einem Cokatalysator auf Basis einer organischen Aluminiumverbindung, dadurch gekennzeichnet, daß der katalytische Bestandteil aus den katalytischen Bestandteilen nach einem der Ansprüche 19 bis 30 oder erhalten aus Teilchen nach einem der Ansprüche 1 bis 13 ausgewählt ist.

**32.** Verfahren zur Herstellung von Polypropylen nach Anspruch 31, dadurch gekennzeichnet, daß der Großteil der Teilchen ein Verhältnis (D)/(d) zwischen 1,5 und 2,5 besitzt.

Figure 1

Figure 2

PHOTO 1

PHOTO 2

PHOTO 3

PHOTO 4

PHOTO 5